# EUROPÄISCHE PATENTSCHRIFT

(11) **EP 2 820 023 B1**
(45) Veröffentlichungstag und Bekanntmachung des Hinweises auf die Patenterteilung: **12.08.2015**
(21) Anmeldenummer: 13705821.0
(22) Anmeldetag: 26.02.2013
(51) Int. Cl.: C07F 7/08, C07F 7/18, C08J 7/12

(54) **ORGANOSILICIUMVERBINDUNGEN UND DEREN VERWENDUNG ZUR HERSTELLUNG VON HYDROPHILEN OBERFLÄCHEN**
ORGANOSILICON COMPOUNDS AND THE USE THEREOF FOR PRODUCING HYDROPHILIC SURFACES
COMPOSÉS ORGANOSILICIÉS ET LEUR UTILISATION POUR FABRIQUER DES SURFACES HYDROPHILES

(30) Priorität: 01.03.2012 DE 102012203274
(43) Veröffentlichungstag der Anmeldung: 07.01.2015
(73) Patentinhaber: Wacker Chemie AG, 81737 München (DE)
(72) Erfinder: PRASSE, Marko, 01612 Glaubitz (DE); SCHEIM, Uwe, 01640 Coswig (DE)
(74) Vertreter: Budczinski, Angelika
(86) Internationale Anmeldenummer: PCT/EP2013/053791
(87) Internationale Veröffentlichungsnummer: WO 2013/127775

(56) Entgegenhaltungen:
- WO-A1-2011/022827
- BROOK, MICHAEL A. ET AL: "Elastomeric hydrogels by polymerizing silicone microemulsions", CHEMICAL COMMUNICATIONS (CAMBRIDGE, UNITED KINGDOM) , 47(31), 8874-8876 CODEN: CHCOFS; ISSN: 1359-7345, 2011, XP002697693,

## Beschreibung

Die Erfindung betrifft Organosiliciumverbindungen, Verfahren zu deren Herstellung sowie deren Verwendung zur Erzeugung hydrophiler Oberflächen, vorzugsweise Zusammensetzungen, Zubereitungen und Materialien, die diese Verbindungen enthalten oder mit diesen Verbindungen beschichtet sind.

Die Erzeugung von hydrophilen Oberflächen ist in vielen Bereichen erwünscht. Bei Baustoffen und Bauhilfsstoffen können hydrophile Oberflächen erwünscht sein zur Verminderung der Tröpfchenbildung, zum schnelleren Ablaufen von Wasser und Kondensat und somit zur schnellere Abtrocknung und Vermeidung von Kalkablagerungen und Rückstände aus dem Wasser. Optische Teile, Gläser und Fenster können durch hydrophile Oberflächen vor dem Beschlagen geschützt werden. Bei Siliconen können hydrophile Oberflächen die Anhaftung von Mikroorganismen, Salzablagerungen und Verschmutzungen mit organischen Stoffen verzögern. Auf Nichtleitern verbessern hydrophile Oberflächen die Anti-Statik-Eigenschaften. Michael A. Brook et al. in Chem. Commun., 2011, 47, 8874-8876 offenbart Verbindungen und deren Verwendung zur Verbesserung oder Herstellung von hydrophilen Oberflächen.

In JP 2009184888 A2 werden Verbindungen der Art 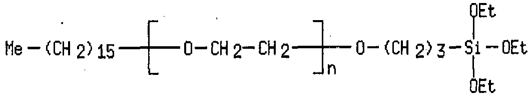 beschrieben, die aus dem PEG-Alkoholat und Chlorpropyl-triethoxysilan hergestellt werden und zur Erzeugung mesoporöser Strukturen verwendet werden.

In CN 1451471 A werden Verbindungen der Art 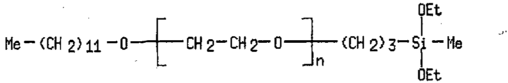 beschrieben, die aus dem PEG-Alkoholat und Chlorpropyl-methyldiethoxysilan hergestellt werden und in 1-K-Wasserbasierenden Produkten verwendet werden.

In US 4,844,980 A werden Verbindungen der Art 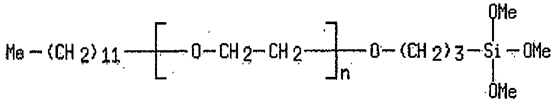 beschrieben, die aus dem PEG-Alkoholat und Chlorpropyl-trimethoxysilan hergestellt werden und zur Beschichtung von Partikeln verwendet werden.

In JP 2008032860 A2 werden Verbindungen der Art 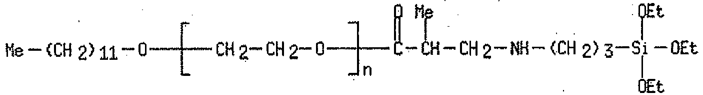 beschrieben, die aus dem PEG-methacrylat und 3-Aminopropyltriethoxysilan hergestellt werden und in härtbaren Massen verwendet werden.

In EP 406731 B1 werden Verbindungen der Art 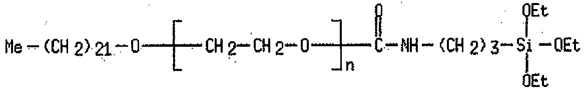 beschrieben, die aus dem Alkyl-PEG und 3-Isocyanato-propyl-triethoxysilan hergestellt werden und zur Oberflächenbehandlung von Glimmer verwendet werden.

In US 5,354,881 A werden ebenfalls Verbindungen beschrieben, die aus dem Alkyl-PEG und Isocyanato-funktionellen Silanen hergestellt werden.

Die Herstellungsverfahren der oben genannten Verbindungen haben den Nachteil, dass unzugängliche und/oder kostenintensive Rohstoffe eingesetzt oder Nebenprodukte abgetrennt werden müssen.

Gegenstand der Erfindung sind Verbindungen der Formel

(R¹O)ₐR₃-ₐSi-A-O(CH₂CH₂-O)ₓ-R² (I),

wobei
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt,
A einen zweiwertigen über Kohlenstoff an Si und O gebundenen, gegebenenfalls substituierten Kohlenwasserstoffrest bedeutet, der eine Hydroxylgruppe und eine Estergruppe (-O-C(=O)-) enthält und mit Sauerstoffatomen unterbrochen sein kann,
R² einen einwertigen, gegebenenfalls substituierten Kohlenwasserstoffrest mit 8 bis 20 Kohlenstoffatomen darstellt,
a 1, 2 oder 3, bevorzugt 2 oder 3, insbesondere 3, ist und
x eine ganze Zahl von 1 bis 20, bevorzugt eine ganze Zahl von 2 bis 15, besonders bevorzugt eine ganze Zahl von 3 bis 10, ist.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cyclöalkylreste, wie der Cyclopentyl-, Cyclohexyl-, Cycloheptylrest und Methylcyclohexylreste; Alkenylreste, wie der Vinyl-, 1-Pro-penyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Bevorzugt handelt es sich bei Rest R um Kohlenwasserstoffreste mit 1 bis 12 Kohlenstoffatomen, besonders bevorzugt um Methyl-, Ethyl-, Vinyl- und Phenylreste, insbesondere um den Methylrest.

Beispiele für gegebenenfalls substituierte Kohlenwasserstoffreste R¹ sind die für Rest R angegebenen Beispiele.

Bei den Resten R¹ handelt es sich vorzugsweise um wasserstoff-atom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Wasserstoffatom sowie den Methyl- und Ethylrest.

Beispiele für gegebenenfalls substituierte Kohlenwasserstoffreste R² sind die für Rest R angegebenen Beispiele mit 8 bis 20 Kohlenstoffatomen sowie Alkylreste, wie der Lauryl-, iso-Tride-cyl-, Palmitoyl- und Stearylrest; Cycloalkylreste, wie der Cyclohexylbutylrest; sowie Alkenylreste, wie der Undecenyl-, Hexadecenyl- und Oleylrest.

Bei den Resten R² handelt es sich vorzugsweise um gegebenenfalls mit Halogenatomen substituierte Kohlenwasserstoffreste mit 8 bis 20 Kohlenstoffatomen, besonders bevorzugt um Kohlenwasserstoffreste mit 8 bis 20 Kohlenstoffatomen, insbesondere um Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Tridecylreste, wie der iso-Tridecylrest; Hexadecylreste, wie der n-Hexadecylrest; Octadecylreste, wie der n-Octadecyl-rest; Cycloalkylreste, wie der 4-Cyclohexyl-butylrest und Alkenylreste, wie der Undecenyl-, Hexadecenyl- und Oleylrest.

Bevorzugt handelt es sich bei Rest A um solche mit genau einer OH-Gruppe und genau einem Esterrest, besonders bevorzugt um solche, bei denen das die OH-Gruppe tragende Kohlenstoffatom über einen CH- bzw. CH₂-Rest mit dem -0- der Estergruppe verbunden ist.

Bevorzugte Reste für A sind

-CH₂CH₂CH₂OCH₂CH (OH) CH₂OC (=O) CH₂-,

-CH₂CH₂CH₂OCH₂CH (CH₂OH) OC (=0) CH₂-,

-CH₂CH₂CH₂CH₂CH (OH) CH₂OC (=O) CH₂-,

-CH₂CH₂CH₂CH₂CH(CH₂OH)OC(=O)CH₂-,

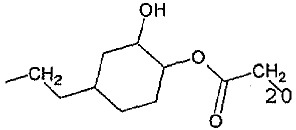

oder

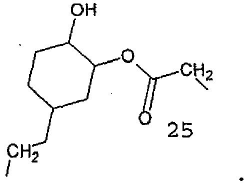

Besonders bevorzugt handelt es sich bei Rest A um

-CH₂CH₂CH₂OCH₂CH(OH)CH₂OC(=O)CH₂- und

-CH₂CH₂CH₂OCH₂CH(CH₂OH)OC(=O) CH₂-.

Beispiele für erfindungsgemäße Verbindungen der Formel (I) sind

(MeO)₃Si-CH₂CH₂CH₂OCH₂CH(OH)CH₂OC(=O)CH₂-O(CH₂CH₂O)₂₋₆-C₈H₁₇,

(EtO)₂MeSi-CH₂CH₂CH₂OCH₂CH(OH)CH₂OC(=O)CH₂-O(CH_{2C}H₂O)₂₋₆-C₈H₁₇,

(MeO)₃Si-CH₂CH₂CH₂OCH₂CH(OH)CH₂OC(=O)CH₂-O(CH₂CH₂O)₅₋₈-(CH₂)₁₁₋₁₃CH₃,

(EtO)₃Si-CH₂CH₂CH₂OCH₂CH(OH)CH₂OC(=O)CH₂-O(CH₂CH₂O)₂₋₆-(CH₂)₁₁₋₁₃CH_{3,}

(MeO)₂MeSi-CH₂CH₂CH₂OCH₂CH(OH)CH₂OC(=O)CH₂-O(CH₂CH₂O)₈-₁₂-iso-C₁₃H₂₇,

(EtO)₃Si-CH₂CH₂CH₂OCH₂CH(OH)CH₂OC(=O)CH₂-O(CH₂CH₂O)₂₋₆-iso-C₁₃H₂₇,

(MeO)₂HOSi-CH₂CH₂CH₂OCH₂CH(OH)CH₂OC(=O)CH₂-O(CH₂CH₂O)₂₋₆-(CH₂)₈CH=CH(CH₂)₅₋₇CH₃,

(HO)₃Si-CH₂CH₂CH₂OCH₂CH(OH)CH₂OC(=O)CH₂-O(CH₂CH₂O)₂₋₆-(CH₂)₈CH=CH(CH₂)₅₋₇CH₃,

(MeO)₂MeSi-CH₂CH₂CH₂OCH₂CH(CH₂OH)OC(=O)CH₂-O(CH₂CH₂O)₂₋₆-C₈H₁₇,

(EtO)₃Si-CH₂CH₂CH₂OCH₂CH(CH₂OH)OC(=O)CH₂-O(CH₂CH₂O)₂₋₆-C₈H₁₇,

(MeO)₃Si-CH₂CH₂CH₂OCH₂CH(CH₂OH)OC(=O)CH₂-O(CH₂CH₂O)₅₋₈-(CH₂)₁₁₋₁₃CH₃,

(EtO)₂HOSi-CH₂CH₂CH₂OCH₂CH(CH₂OH)OC(=O)CH₂-O(CH₂CH₂O)₂₋₆-(CH₂)₁₁₋₁₃CH₃,

(MeO)₃Si-CH₂CH₂CH₂OCH₂CH(CH₂OH)OC(=O)CH₂-O(CH₂CH₂O)₈₋₁₂-iso-C₁₃H₂₇,

(EtO)₃Si-CH₂CH₂CH₂OCH₂CH(CH₂(OH)OC(=O)CH₂-O(CH₂CH₂O)₂₋₆-iso-C₁₃H₂₇,

(MeO)(HO)₂Si-CH₂CH₂CH₂OCH₂CH(CH₂OH)OC(=O)CH₂-O(CH₂CH₂O)₂₋₆-(CH₂)₈CH=CH(CH₂)₅₋₇CH₃,

(EtO)₃Si-CH₂CH₂CH₂OCH₂CH(CH₂OH)OC(=O)CH₂-O(CH₂CH₂O)₂₋₆-(CH₂)₈CH=CH(CH₂)₅₋₇CH₃,

(MeO)₃Si-CH₂CH₂CH₂CH₂CH(OH)CH₂OC(=O)CH₂-O(CH₂CH₂O)₂₋₆-C₈H₁₇,

(EtO)₂MeSi-CH₂CH₂CH₂CH₂CH(OH)CH₂OC(=O)CH₂-O(CH₂CH₂O)₂₋₆-C₈H₁₇,

(MeO)₂MeSi-CH₂CH₂CH₂CH₂CH(CH₂OH)OC(=O)CH₂-O(CH₂CH₂O)₂₋₆-C₈H₁₇,

(EtO)₃Si-CH₂CH₂CH₂CH₂CH(CH₂OH)OC(=O)CH₂-O(CH₂CH₂O)₂₋₆-C₈H₁₇,

und 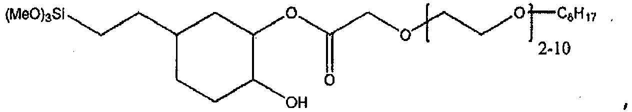 wobei Me für Methylrest und Et für Ethylrest steht.

Bevorzugt handelt es sich bei den erfindungsgemäßen Verbindungen der Formel (I) um

(MeO)₃Si-CH₂CH₂CH₂OCH₂CH(OH)CH₂OC(=O)CH₂-O(CH₂CH₂O)₂₋₁₅-C₈H₁₇,

(EtO)₃Si-CH₂CH₂CH₂C)CH₂CH(OH)CH₂OC(=O)CH₂-O(CH₂CH₂O)₂₋₁₅-C₈H₁₇,

(MeO)₃Si-CH₂CH₂CH₂OCH₂CH(OH)CH₂OC(=O)CH₂-O(CH₂CH₂O)₂₋₁₅-(CH₂)₁₁₋₁₃CH₃,

(EtO)₃Si-CH₂CH₂CH₂OCH₂CH(OH)CH₂OC(=O)CH₂-O(CH₂CH₂O)₂₋₁₅-(CH₂)₁₁₋₁₃CH₃,

(MeO)₃Si-CH₂CH₂CH₂OCH₂CH(OH)CH₂OC(=O)CH₂-O(CH₂CH₂O)₂₋₁₅-iso-C₁₃H₂₇,

(EtO)₃Si-CH₂CH₂CH₂OCH₂CH(OH)CH₂OC(=O)CH₂-O(CH₂CH₂O)₂₋₁₅-iso-C₁₃H₂₇,

(MeO)₃Si-CH₂CH₂CH₂OCH₂CH(OH)CH₂OC(=O)CH₂-O(CH₂CH₂O)₂₋₁₅-(CH₂)₈CH=CH(CH₂)₅₋₇CH₃,

(EtO)₃Si-CH₂CH₂CH₂OCH₂CH(OH)CH₂OC(=O)CH₂-O(CH₂CH₂O)₂₋₁₅-(CH₂)₈CH=CH(CH₂)₅₋₇CH₃,

(MeO)₃Si-CH₂CH₂CH₂OCH₂CH(CH₂OH)OC(=O)CH₂-O(CH₂CH₂O)₂₋₁₅-C₈H₁₇,

(EtO)₃Si-CH₂CH₂CH₂OCH₂CH(CH₂OH)OC(=O)CH₂-O(CH₂CH₂O)₂₋₁₅-C₈H17,

(MeO)₃Si-CH₂CH₂CH₂OCH₂CH(CH₂OH)OC(=O)CH₂-O(CH₂CH₂O)₂₋₁₅-(CH₂)₁₁₋₁₃CH₃,

(EtO)₃Si-CH₂CH₂CH₂OCH₂CH(CH₂OH)OC(=O)CH₂-O(CH₂CH₂O)₂₋₁₅-(CH₂)₁₁₋₁₃CH₃,

(MeO)₃Si-CH₂CH₂CH₂OCH₂CH(CH₂OH)OC(=O)CH₂-O(CH₂CH₂O)₂₋₁₅-iso-C₁₃H₂₇,

(EtO)₃Si-CH₂CH₂CH₂OCH₂CH(CH₂(OH))OC(=O)CH₂-O(CH₂CH₂O)₂₋₁₅-iso-C₁₃H₂₇,

(MeO)₃Si-CH₂CH₂CH₂OCH₂CH(CH₂OH)OC(=O)CH₂-O(CH₂CH₂O)₂₋₁₅-(CH2)₈CH=CH(CH₂)₅₋₇CH₃,

(EtO)₃Si-CH₂CH₂CH₂OCH₂CH(CH₂OH)OC(=O)CH₂-O(CH₂CH₂O)₂₋₁₅-(CH₂)₈CH=CH(CH₂)₅₋₇CH₃, besonders bevorzugt um

(MeO)₃Si-CH₂CH₂CH₂OCH₂CH(OH)CH₂OC(=O)CH₂-O(CH₂CH₂O)₃₋₁₀-C₈H₁₇,

(EtO)₃Si-CH₂CH₂CH₂OCH₂CH(OH)CH₂OC(=O)CH₂-O(CH₂CH₂O)₃₋₁₀-C₈H₁₇,

(MeO)₃Si-CH₂CH₂CH₂OCH₂CH(OH)CH₂OC(=O)CH₂-O(CH₂CH₂O)₃₋₁₀-(CH₂)₁₁₋₁₃CH₃,

(EtO)₃Si-CH₂CH₂CH₂OCH₂CH(OH)CH₂OC(=O)CH₂-O(CH₂CH₂O)₃₋₁₀-(CH₂)₁₁₋₁₃CH₃,

(MeO)₂MeSi-CH₂CH₂CH₂OCH₂CH(OH)CH₂OC(=O)CH₂-O(CH₂CH2O)₃₋₁₀-iso-C₁₃H₂₇,

(EtO)₃Si-CH₂CH₂CH₂OCH₂CH(OH)CH₂OC(=O)CH₂-O(CH₂CH₂O)₃-₁₀-iso-C₁₃H₂₇,

(MeO)3Si-CH-₂CH₂CH₂OCH₂CH(CH₂OH)OC(=O)CH₂-O(CH₂CH₂O)₃₋₁₀-C₈H₁₇,

(EtO)₃Si-CH₂CH₂CH₂OCH₂CH(CH₂OH)OC(=O)CH₂-O(CH₂CH₂O)₃₋₁₀-C₈H₁₇,

(MeO)₃Si-CH₂CH₂CH₂OCH₂CH(CH₂OH)OC(=O)CH₂-O(CH₂CH₂O)₃₋₁₀-(CH₂)₁₁₋₁₃CH₃,

(EtO)₃Si-CH₂CH₂CH₂OCH₂CH(CH₂OH)OC(=O)CH₂-O(CH₂CH₂O)₃₋₁₀-(CH₂)₁₁₋₁₃CH₃,

(MeO)₃Si-CH₂CH₂CH₂OCH₂CH(CH₂OH)OC(=O)CH₂-O(CH₂CH₂O)₃₋₁₀-iso-C₁₃H₂₇,

(EtO)₃Si-CH₂CH₂CH₂OCH₂CH(CH₂(OH))OC(=O)CH₂-O(CH₂CH₂O)₃₋₁₀-iso-C₁₃H_{27.}

Die erfindungsgemäßen Verbindungen der Formel (I) sind bei Raumtemperatur und 1013 hPa bevorzugt wasserklare bis leicht trübe, farblose bis gelbliche Flüssigkeiten.

Die erfindungsgemäßen Verbindungen der Formel (I) können nach in der Chemie üblichen Methoden hergestellt werden. Beispielsweise kann der siloxysubstituierte Polyether durch Addition von epoxyfunktionelle Silane an handelsübliche entwässerte Alkyl-(polyetylenglykol)ethercarboxylate, katalysiert mit 1,4-Diazabicyclo[2.2.2]octan, hergestellt werden.

Ein weiterer Gegenstand der Erfindung ist ein Verfahren zur Herstellung der Verbindungen der Formel (I) durch Addition von epoxyfunktionellen Silanen an Polyethylenglykole, die an einem Ende eine Carboxymethyl-Gruppe (-CH₂-COOH) tragen und am anderen Ende einen Kohlenwasserstoffrest mit 8 bis 20 Kohlenstoffatomen aufweisen, in Anwesenheit von die Arilagerung von Epoxygruppen an Carboxylgruppen fördernden Katalysator.

Bei den Epoxygruppen der im erfindungsgemäßen Verfahren eingesetzten Silane handelt es sich bevorzugt um Glycidoxygruppen oder epoxydierte Doppelbindungen.

Die erfindungsgemäß eingesetzten Polyethylenglykole, die an einem Ende eine Carboxymethyl-Gruppe (-CH₂-COOH) tragen und am anderen Ende einen Kohlenwasserstoffrest mit 8 bis 20 Kohlenstoffatomen aufweisen, haben eine Restfeuchte von bevorzugt unter 0,2 Gew.-%. Dabei kann es von Vorteil sein, handelsübliche Polyethylenglykole, die an einem Ende eine Carboxymethyl-Gruppe und am anderen Ende einen Kohlenwasserstoffrest mit 8 bis 20 Kohlenstoffatomen aufweisen, vor ihrem Einsatz zu entwässern, bevorzugt bei Temperaturen zwischen 50 und 150°C und einem Absolutdruck von 1 hPa bis 100 hPa.

Bei dem erfindungsgemäßen Verfahren werden epoxyfunktionelle Silane und Polyethylenglykole, die an einem Ende eine Carboxymethyl-Gruppe (-CH₂-COOH) tragen und am anderen Ende einen Kohlenwasserstoffrest mit 8 bis 20 Kohlenstoffatomen aufweisen in einem Molverhältnis von 1:1,2 bis 1,2:1, besonders bevorzugt 1:1, eingesetzt.

Das erfindungsgemäße Verfahren kann bei den gleichen Bedingungen durchgeführt werden, wie auch die bisher bekannten Epoxy-Carboxyl-Reaktionen.

Das erfindungsgemäße Verfahren wird bevorzugt bei Temperaturen zwischen 20 und 150°C beim Druck der umgebenden Atmosphäre, d.h. in der Regel etwa 1013 hPa, durchgeführt. Bevorzugt wird die Epoxy-Carboxyl-Reaktion, vorzugsweise die Umsetzung von α-Carboxymethyl-ω-alkylpoly(ethylenglycol) mit epoxyfunktionellen Tri- oder Dialkoxymethyl-silanen, ohne Zusatz eines Lösungsmittels durchgeführt.

Als Katalysator können im erfindungsgemäßen Verfahren bekannte, die Epoxy-Carboxyl-Reaktion unterstützende Verbindungen eingesetzt werden. Beispiele für die Anlagerung von Epoxygruppen an Carboxylgruppen fördernde Katalysatoren sind die in EP 1235646 B1, Seite 2, Zeile 21, bis Seite 3, Zeile 34 genannten Beispiele, die zum Offenbarungsgehalt der vorliegenden Erfindung zu zählen sind. Bevorzugt handelt es sich bei dem erfindungsgemäß eingesetzten Katalysator um 1,4-Diazabicyclo[2.2.2]octan.

Nach erfolgter Epoxy-Carboxyl-Reaktion kann die Reaktionsmischung nach bisher bekannten Verfahren aufgearbeitet werden. Bevorzugt wird dabei der Katalysator entfernt, vorzugsweise mit saurem Ionenaustauscher oder durch Behandlung mit Silicagel o-der Aktivkohle. Anschließend können die festen Rückstände vom Reaktionsprodukt durch Filtration oder Dekantieren abgetrennt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die im erfindungsgemäßen Verfahren eingesetzten Komponenten sind handelsübliche Produkte bzw. können nach in der Chemie gängigen Verfahren hergestellt werden.

Die erfindungsgemäßen bzw. erfindungsgemäß hergestellten Verbindungen der Formel (I) können nun für beliebige Zwecke eingesetzt werden, wie z.B. als Zusatz in Farben, Lacken, Putzen, Klebern und Dichtstoffen oder als Zusatz zu Beschichtungsmitteln für Baustoffe, wie Beton, Silikate, Gips, Glas oder Holz.

Ein weiterer Gegenstand der Erfindung sind vernetzbare Massen enthaltend erfindungsgemäße Verbindungen der Formel (I).

Bei den erfindungsgemäßen Massen kann es sich um beliebige, bisher bekannte Typen von zu Elastomeren vernetzbaren Massen auf der Basis von Organosiliciumverbindungen handeln, wie beispielsweise einkomponentige oder zweikomponentige vulkanisierbare Organopolysiloxanmassen. Die vernetzbaren Massen können dabei frei von Füllstoffen sein, können aber auch aktive oder nicht aktive Füllstoffe enthalten.

Bei den erfindungsgemäßen Massen handelt es sich bevorzugt um durch Kondensationsreaktion vernetzbare Massen, besonders bevorzugt um einkomponentige, unter Ausschluss von Wasser lagerfähige, bei Zutritt von Wasser bei Raumtemperatur vernetzbare Massen (RTV-1). Bei den erfindungsgemäßen Massen kann es sich aber auch um zweikomponentige durch Kondensationsreaktion vernetzbare Massen handeln.

Art und Menge der üblicherweise in solchen Massen verwendeten Komponenten sind bereits bekannt. Bevorzugt handelt es sich bei den erfindungsgemäßen vernetzbaren Massen um solche, die neben den Verbindungen der Formel (I) Organopolysiloxane mit mindes-tens zwei kdhdensationsfähigen Resten, gegebenenfalls Vernetzer mit mindestens drei hydrolysierbaren Resten, gegebenenfalls Kondensationskatalysator, gegebenenfalls Füllstoffe und gegebenenfalls Additive enthalten.

Die erfindungsgemäßen Massen enthalten Verbindungen der Formel (I) in Mengen von bevorzugt 0,1 bis 5 Gew.-%, besonders bevorzugt 0,2 bis 2 Gew.-%.

Die Vernetzung der erfindungsgemäßen Massen kann unter den dafür bekannten Bedingungen durchgeführt werden. So reicht z.B. bei den besonders bevorzugten RTV-1-Massen der übliche Wassergehalt der Luft aus, wobei die Vernetzung vorzugsweise bei Raumtemperatur und dem Druck der umgebenden Atmosphäre, also etwa 900 bis 1100 hPa, durchgeführt wird.

Ein weiterer Gegenstand der vorliegenden Erfindung sind Formkörper, hergestellt durch Vernetzung der erfindungsgemäßen Massen.

Ein weiterer Gegenstand der vorliegenden Erfindung ist ein Verfahren zur Modifizierung von Oberflächen von Substraten, in dem die Verbindung der Formel (I) auf die Oberfläche des Substrats aufgetragen wird.

Bei den erfindungsgemäß eingesetzten Substraten handelt es sich bevorzugt um ausgehärtete Siliconelastomere, Glasoberflächen, Oberflächen von silicatischen Baustoffen, wie Beton, Steinzeug und Porzellan, oder Metalle, wie Stahl und Aluminium, sowie Kunststoffe, wie PVC, PMMA und Polycarbonat.

Bei der erfindungsgemäßen Auftragung der Verbindungen der Formel (I) auf die Substratoberfläche kann die Verwendung eines organischen Lösungsmittels, wie z.B. Mischungen von aliphätischen Kohlenwasserstoffen, beispielsweise erhältlich unter der Handelsbezeichnung "Shellsol D60", oder Ethern, wie z.B. Tetrahydrofuran, vorteilhaft sein. Eine weitere bevorzugte Variante ist die Verwendung von Verbindungen der Formel (I) in wässriger Lösung oder als Emulsion. Das Auftragen der jeweiligen Substanz kann nach bekannten Methoden erfolgen, wie beispielsweise durch Pinseln, Wischen, Sprühen, Auftrag mit einer Rolle oder Tauchen.

Falls erwünscht, können im erfindungsgemäßen Verfahren zur Modifizierung von Oberflächen von Substraten zusätzlich zu Verbindungen der Formel (I) weitere Komponenten eingesetzt werden, wie z.B. Kondensationskatalysatoren.

Bei den im erfindungsgemäßen Verfahren gegebenenfalls eingesetzten Kondensationskatalysatoren kann es sich um alle Härtungsbeschleuniger handeln, die bisher in durch Kondensationsreaktion vernetzbare Massen eingesetzt werden, wie beispielsweise Titanverbindungen und organische Zinnverbindungen.

Bevorzugt werden im erfindungsgemäßen Verfahren zur Modifizierung von Oberflächen Kondensationskatalysatoren eingesetzt. Nach erfolgter Behandlung der Oberflächen können diese von den gegebenenfalls eingesetzten Lösungsmitteln, auf an sich bekannte Art und Weise, wie etwa durch sog. natürliche Trocknung, d.h. Verdampfen bei Raumtemperatur und Druck der umgebenden Atmosphäre, befreit werden.

Die erfindungsgemäß modifizierten Oberflächen haben den Vorteil, dass sie dauerhaft hydrophil sind.

Die erfindungsgemäßen Verbindungen haben den Vorteil, dass sie leicht herzustellen sind und bereits in geringer Menge eine sehr stark hydrophilisierende Wirkung haben, selbst wenn man die Verbindungen vernetzbaren Massen zusetzt. Darüber hinaus bleibt der Effekt auch über längere Zeit erhalten, d.h. er verringert sich nicht dadurch, dass die hydrophilisierende Schicht wieder durch überwandernde Siloxane hydrophob wird.

Die erfindungsgemäßen Verbindungen haben den Vorteil, dass sie Siloxanelastomeroberflächen bereits in geringen Mengen eine permanente Hydrophilie verleihen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Zur Beurteilung des Ablaufwinkels von Wassertropfen auf der Oberfläche nach 49 Duschcyclen (Test 1) werden die vernetzbaren Massen in jeweils einer 2 mm dicken Schicht auf PE-Folie aufgetragen und 7 Tage bei 23°C und 50 % relativer Luftfeuchtigkeit ausgehärtet. Nun wird das Fell in einem Winkel von 30 Grad zur Horizontalen in einen Duschtester gelegt und 7 mal am Tag für je 5 Minuten beduscht. Anschließend wird das Fell in einem Viertelkreis gelegt, so dass der Bereich von waagerecht (= 0°) bis senkrecht (= 90°) mit dem Fell bedeckt ist. Auf einem Winkel größer 50° werden vier Wassertropfen von 6 µl, 10 µl, 15 µl und 20 µl aufgetragen und der Ablaufwinkel nach 5 min an der Tropfenunterkante abgelesen. Die Werte werden mit einer Genauigkeit von +/- 1 Grad ermittelt und notiert.

### Beispiel 1

### Herstellung von (Produkt 1)

(CH₃O)₃Si-CH₂CH₂CH₂OCH₂CH(OH)CH₂OC(=O)CH₂-O(CH₂CH₂O)₂₋₆-(CH₂)₁₁₋₁₃CH₃

und

(CH₃O)₃Si-CH₂CH₂CH₂OCH₂CH(CH₂OH)OC(=O)CH₂-O(CH₂CH₂O)₂₋₆-(CH₂)₁₁₋₁₃CH₃

In einem Glaskolben mit Liebigkühler und Vorlage wurden 100 g Glykolsäure-ethoxylat-laurylether (Mn=460 g/mol) (käuflich erhältlich unter der Bezeichnung AKYPO RLM 45 CA bei KAO Chemicals GmbH, D-Emmerich) bei 100°C und 20 mbar gerührt bis sich kein Wasser mehr abscheidet. Nach dem Belüften mit Stickstoff, wurden 47 g (3-Glycidoxypropyl)trimethoxysilan (käuflich erhältlich unter der Marke GENIOSIL^{®} GF 80 bei der Wacker Chemie AG, D-München) und 0,5 g 1,4-Diazabicyclo[2:2.2]octan (käuflich erhältlich unter der Bezeichnung DABCO^{®} bei Sigma-Aldrich Chemie GmbH, D-Taufkirchen) zugegeben und 2 Stunden bei 100°C gerührt. Nach dem Abkühlen und Filtrieren erhält man 135 g einer gelblichen Flüssigkeit. Mittels 13C-NMR und Titration konnte ein Additionsgrad von über 80 % festgestellt werden.

100 g einer bei Abwesenheit von Luftfeuchtigkeit lagerstabilen und bei Zutritt von Luftfeuchtigkeit unter Abspaltung von Alkoholen vernetzenden RTV1-Paste (käuflich erhältlich unter der Marke ELASTOSIL^{®} EL7000N TRAN S1 bei der Wacker Chemie AG, D-München) und 1 g Produkt 1 wurden in einem Hauschild-Mischer zweimal je eine Minute bei 3000 UPM verrührt. Mit der so erhaltenen Masse wurde Test 1 durchgeführt. Die Ergebnisse finden sich in Tabelle 1.

### Beispiel 2

### Herstellung von (Produkt 2)

(EtO)₃Si-CH₂CH₂CH₂OCH₂CH(OH)CH₂OC(=O)CH₂-O(CH₂CH₂O)₅₋₉-iso-C₁₃H₂₇

und

(EtO)₃Si-CH₂CH₂CH₂OCH₂CH(CH₂OH)OC(=O)CH₂-O(CH₂CH₂O)₅₋₉-iso-C₁₃H₂₇

In einem Glaskolben mit Liebigkühler und Vorlage wurden 100 g Glykolsäure-ethoxylat-iso-tridecanolether (Mn=570 g/mol) (käuflich erhältlich unter der Bezeichnung Marlowet 4538 bei Sasol Germany GmbH, D-Hamburg) bei 100°C und 20 mbar gerührt bis sich kein Wasser mehr abscheidet. Nach dem Belüften mit Stickstoff, wurden 45 g (3-Glycidoxypropyl)trimethoxysilan (käuflich erhältlich unter der Marke GENIOSIL^{®} GF 82 bei der Wacker Chemie AG, D-München) und 0,5 g 1,4-Diazabicyclo[2.2.2]octan(käuflich erhältlich unter der Bezeichnung DABCO^{®} bei Sigma-Aldrich Chemie GmbH, D-Taufkirchen) zugegeben und 2 Stunden bei 100°C gerührt. Nach dem Abkühlen und Filtrieren erhält man 137 g einer gelblichen Flüssigkeit. Mittels 13C-NMR und Titration konnte ein Additionsgrad von über 80 % festgestellt werden.

Die in Beispiel 1 beschriebene Verfahrensweise wird wiederholt mit der Abänderung, dass 1 g Produkt 2 anstelle von Produkt 1 eingesetzt wird. Die Ergebnisse finden sich in Tabelle 1.

### Beispiel 3

### Herstellung von (Produkt 3)

(CH₃O)₃Si-CH₂CH₂CH₂OCH₂CH(OH)CH₂OC(=O)CH₂-O(CH₂CH₂O)₃₋₇-(CH₂)₈CH=CH(CH₂)₅₋₇CH₃

und

(CH₃O)₃Si-CH₂CH₂CH₂OCH₂CH(CH₂(OH))OC(=O)CH₂-O(CH₂CH₂O)₃₋₇-(CH₂)₈CH=CH(CH₂)₅₋₇CH₃

In einem Glaskolben mit Liebigkühler und Vorlage wurden 105 g Glykolsäure-ethoxylat-oleylether (Mn=540 g/mol) (käuflich erhältlich unter der Bezeichnung AKYPO RO 50 VG bei KAO Cheinicals GmbH, D-Emmerich) bei 100°C und 20 mbar gerührt bis sich kein Wasser mehr abscheidet. Nach dem Belüften mit Stickstoff, wurden 43 g (3-Glycidoxypropyl)trimethoxysilan (käuflich erhältlich unter der Marke GENIOSIL^{®} GF 80 bei der Wacker Chemie AG, D-München) und 0,5 g 1,4-Diazabicyclo[2.2.2]octan (käuflich,erhältlich unter der Bezeichnung DABCO^{®} bei Sigma-Aldrich Chemie GmbH, D-Taufkirchen) zugegeben und 2 Stunden bei 100°C gerührt. Nach dem Abkühlen und Filtrieren erhält man 138 g einer trüben und gelblichen Flüssigkeit. Mittels 13C-NMR und Titration konnte ein Additionsgrad von ca. 75% festgestellt werden.

Die in Beispiel 1 beschriebene Verfahrensweise wird wiederholt mit der Abänderung, dass 1 g Produkt 3 anstelle von Produkt 1 eingesetzt wird. Die Ergebnisse finden sich in Tabelle 1.

### Beispiel 4

### Herstellung von (Produkt 4)

(CH_{3O})₃Si-CH₂CH₂CH₂OCH₂CH(OH)CH₂OC(=O)CH₂-O(CH₂CH₂O)₆₋₁₀-(CH₂)₇CH₃

und

(CH₃₀)₃Si-CH₂CH₂CH₂OCH₂CH(CH₂(OC))OC(=O)CH₂-O(CH₂CH₂O)₆₋₁₀-(CH₂)₇CH₃

In einem Glaskolben mit Liebigkühler und Vorlage wurden 105 g Glykolsäure-ethoxylat-caprylether (Mn=547 g/mol) (käuflich erhältlich unter der Bezeichnung AKYPO LF 2 bei KAO Chemicals GmbH, D-Emmerich) bei 100°C und 20 mbar gerührt bis sich kein Wasser mehr abscheidet. Nach dem Belüften mit Stickstoff, wurden 45 g (3-Glycidoxypropyl)trimethoxysilan (käuflich erhältlich unter der Marke GENIOSIL^{®} GF 80 bei der Wacker Chemie AG, D-München) und 0,5 g 1,4-Diazabicyclo[2.2.2]octan (käuflich erhältlich unter der Bezeichnung DABCO^{®} bei Sigma-Aldrich Chemie Gmbh, D-Taufkirchen) zugegeben und 2 Stunden bei 100°C gerührt. Nach dem Abkühlen und Filtrieren erhält man 140 g einer hellgelben Flüssigkeit. Mittels 13C-NMR und Titration konnte ein Additionsgrad von ca. 85 % festgestellt werden.

Die in Beispiel 1 beschriebene Verfahrensweise wird wiederholt mit der Abänderung, dass 1 g Produkt 4 anstelle von Produkt 1 eingesetzt wird. Die Ergebnisse finden sich in Tabelle 1.

### Vergleichsbeispiel 1 (V1)

Die in Beispiel 1 beschriebene Verfahrensweise wird wiederholt mit der Abänderung, dass kein Produkt 1 eingesetzt wird. Die Ergebnisse finden sich in Tabelle 1.

**Tabelle 1**

| Beispiel | Abrollwinkel 20 µl, in Grad | Abrollwinkel 15 µl, in Grad | Abrollwinkel 10 µl, in Grad | Abrollwinkel 6 µl, in Grad |
|---|---|---|---|---|
| 1 | 8 | 10 | 11 | 17 |
| 2 | 5 | 13 | 20 | 42 |
| 3 | 10 | 12 | 15 | 20 |
| 4 | 10 | 13 | 17 | 35 |
| V1 | 35 | >50 | >50 | >50 |

## Patentansprüche

1. Verbindungen der Formel
(R¹O)ₐR₃₋ₐSi-A-O(CH₂CH₂-O)ₓ-R² (I),
wobei
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt,
A einen zweiwertigen über Kohlenstoff an Si und 0 gebundenen, gegebenenfalls substituierten Kohlenwasserstoffrest bedeutet, der eine Hydroxylgruppe und eine Estergruppe (-O-C(=O)-) enthält und mit Sauerstoffatomen unterbrochen sein kann,
R² einen einwertigen, gegebenenfalls substituierten Kohlenwasserstoffrest mit 8 bis 20 Kohlenstoffatomen darstellt,
a 1, 2 oder 3 ist und
x eine ganze Zahl von, 1 bis 20 ist.

2. Verbindungen gemäß Anspruch 1, **dadurch gekennzeichnet, dass** es sich bei Rest A um solche mit genau einer OH-Gruppe und genau einem Esterrest handelt, bei denen das die OH-Gruppe tragende Kohlenstoffatom über einen CH- bzw. CH₂-Rest mit dem -Oder Estergruppe verbunden ist.

3. Verbindungen gemäß Anspruch 1 oder 2, **dadurch gekennzeichnet, dass** es sich bei den Resten R² um Octyl-, Nonyl-, Decyl-, Dodecyl-, Tridecyl-, Hexadecyl-, Octadecyl- und Cycloalkylreste sowie Undecenyl-, Hexadecenyl- und Oleylreste handelt.

4. Verfahren zur Herstellung der Verbindungen der Formel (I) durch Addition von epoxyfunktionellen Silanen an Polyethylenglykole, die ah einem Ende eine Carboxymethyl-Gruppe (-CH₂-COOH) tragen und am anderen Ende einen Kohlenwasserstoffrest mit 8 bis 20 Kohlenstoffatomen aufweisen, in Anwesenheit von die Anlagerung von Epoxygruppen an Carboxylgruppen fördernden Katalysator.

5. Verfahren gemäß Anspruch 4, **dadurch gekennzeichnet, dass** es sich bei den Epoxygruppen der eingesetzten Silane um Glycidoxy-gruppen oder epoxydierte Doppelbindungen handelt.

6. Vernetzbare Massen enthaltend Verbindungen der Formel (I) gemäß einem oder mehreren der Ansprüche 1 bis 3 oder hergestellt gemäß Anspruch 4 oder 5.

7. Vernetzbare Massen gemäß Anspruch 6, **dadurch gekennzeichnet, dass** es sich um einkomponentige, unter Ausschluss von Wasser lagerfähige, bei Zutritt von Wasser bei Raumtemperatur vernetzbare Massen (RTV-1) handelt.

8. Formkörper, hergestellt durch Vernetzung der Massen gemäß Anspruch 6 oder 7.

9. Verfahren zur Modifizierung von Oberflächen von Substraten, indem Verbindung der Formel (I) gemäß einem oder mehreren der Ansprüche 1 bis 3 oder hergestellt gemäß Anspruch 4 oder 5 auf die Oberfläche des Substrats aufgetragen werden.

## Claims

1. Compounds of the formula
(R¹O)aR₃₋ₐSi-A-O(CH₂CH₂O)ₓ-R² (I),
where
R can be identical or different and represents a monovalent, optionally substituted hydrocarbon moiety, R¹ can be identical or different and represents a hydrogen atom or a monovalent, optionally substituted hydrocarbon moiety,
A is a divalent optionally substituted hydrocarbon moiety which comprises a hydroxy group and an ester group (-O-C(=O)-), and which can have interruption by oxygen atoms, and which has bonding by way of carbon to Si and to 0,
R² represents a monovalent, optionally substituted hydrocarbon moiety having from 8 to 20 carbon atoms,
a is 1, 2 or 3, and
x is an integer from 1 to 20.

2. Compounds according to Claim 1, **characterized in that** moiety A is a moiety having precisely one OH group and having precisely one ester moiety, where the carbon atom bearing the OH group has bonding by way of a CH or CH₂ moiety to the -O- of the ester group.

3. Compounds according to Claim 1 or 2, **characterized in that** the moieties R² are octyl, nonyl, decyl, dodecyl, tridecyl, hexadecyl, octadecyl and cycloalkyl moieties, and also undecenyl, hexadecenyl, and oleyl moieties.

4. Process for the production of the compounds of the formula (I) via an additional reaction of epoxy-functional silanes onto polyethylene glycols which, at one end, bear a carboxymethyl group (-CH₂-COOH) and, at the other end, have a hydrocarbon moiety having from 8 to 20 carbon atoms, in the presence of catalyst which promotes the addition reaction of epoxy groups onto carboxy groups.

5. Process according to Claim 4, **characterized in that** the epoxy groups of the silanes used are glycidoxy groups or epoxydized double bonds.

6. Crosslinkable compositions comprising compounds of the formula (I) according to one or more of Claims 1 to 3, or produced according to Claim 4 or 5.

7. Crosslinkable compositions according to Claim 6, **characterized in that** they are single-component compositions that can be stored with exclusion of water and that are crosslinkable at room temperature in the presence of water (RTV-1).

8. Molding produced via crosslinking of the compositions according to Claim 6 or 7.

9. Process for the modification of surfaces of substrates, by applying, to the surface of the substrate, compound of the formula (I) according to one or more of Claims 1 to 3, or produced according to Claim 4 or 5.

## Revendications

1. Composés de formule
(R¹O)ₐR₃₋ₐSi-A-O(CH₂CH₂-O)ₓ-R² (I)
dans laquelle
R peut être le même ou différent et représente un radical hydrocarboné monovalent, éventuellement substitué,
R¹ peut être le même ou différent et représente un atome d'hydrogène ou un radical hydrocarboné monovalent, éventuellement substitué,
A représente un radical hydrocarboné divalent, éventuellement substitué, lié par un atome de carbone à Si et 0, qui contient un groupe hydroxy et un groupe ester (-O-C(C=O)-) et peut être interrompu par des atomes d'oxygène,
R² représente un radical hydrocarboné monovalent, éventuellement substitué, ayant de 8 à 20 atomes de carbone,
a est 1, 2 ou 3 et
x est un nombre entier valant de 1 à 20.

2. Composés selon la revendication 1, **caractérisés en ce que** pour ce qui du radical A il s'agit de ceux comportant exactement un groupe OH et exactement un radical ester, dans lesquels l'atome de carbone portant le groupe OH est lié à l'atome -O- du groupe ester par un radical CH ou CH₂.

3. Composés selon la revendication 1 ou 2, **caractérisés en ce que** pour ce qui est des radicaux R² il s'agit des radicaux octyle, nonyle, décyle, dodécyle, tridécyle, hexadécyle, octadécyle et cycloalkyle ainsi qu'undécényle, hexadécényle et oléyle.

4. Procédé pour la préparation des composés de formule (I) par fixation par addition de silanes à fonction époxy sur des polyéthylèneglycols qui portent à une extrémité un groupe carboxyméthyle (-CH₂-COOH) et comportent à l'autre extrémité un radical hydrocarboné ayant de 8 à 20 atomes de carbone, en présence de catalyseur favorisant la fixation par addition de groupes époxy sur des groupes carboxy.

5. Procédé selon la revendication 4, **caractérisé en ce que** pour ce qui est des groupes époxy des silanes utilisés il s'agit de groupes glycidoxy ou de doubles liaisons époxydées.

6. Matières réticulables contenant des composés de formule (I) selon une ou plusieurs des revendications 1 à 3 ou préparés selon la revendication 4 ou 5.

7. Matières réticulables selon la revendication 6, **caractérisées en ce qu'**il s'agit de matières réticulables monocomposant, aptes au stockage à l'abri de l'eau, réticulables à la température ambiante (RTV-1), lors d'entrée d'eau.

8. Corps moulé, produit par réticulation des matières selon la revendication 6 ou 7.

9. Procédé pour la modification de surfaces de substrats, par application sur la surface du substrat d'un composé de formule (I) selon une ou plusieurs des revendications 1 à 3 ou préparé selon la revendication 4 ou 5.
